# EUROPÄISCHE PATENTANMELDUNG

(11) **EP 4 354 467 A1**
(43) Veröffentlichungstag der Anmeldung: **17.04.2024**
(21) Anmeldenummer: 23197269.6
(22) Anmeldetag: 13.09.2023
(51) Int. Cl.: H01B 13/00, H01B 17/30, H01B 17/58, H02G 5/00, B60R 16/02

(54) **VERFAHREN ZUM HERSTELLEN EINER DICHTUNG FÜR EINE DOPPELSTROMSCHIENE UND DOPPELSTROMSCHIENE**

(30) Priorität: 12.10.2022 DE 102022126621
(71) Anmelder: Lisa Dräxlmaier GmbH, 84137 Vilsbiburg (DE)
(72) Erfinder: Lettner, Fabian, 5280 Burgkirchen (AT); Zauner, Josef, 5233 Pischelsdorf (AT)

(57) **Zusammenfassung**

Die vorliegende Erfindung bezieht sich auf ein Verfahren zum Herstellen einer Dichtung (104) für eine Doppelstromschiene (100), wobei die Doppelstromschiene aus zwei separat elektrisch isolierten, übereinander angeordneten Flachleitern (106) zusammengesetzt ist, wobei die Doppelstromschiene in einen Formhohlraum (110) zum Formen der Dichtung eingelegt wird, wobei der Formhohlraum um die Doppelstromschiene geschlossen wird und mit einem Dichtungsmaterial (118) gefüllt wird, wobei das Dichtungsmaterial die Flachleiter umfließt, an den Flachleitern anhaftet und im Formhohlraum zu einer an die Doppelstromschiene angegossenen Dichtung erstarrt.

## Beschreibung

### Technisches Gebiet

Die vorliegende Erfindung betrifft ein Verfahren zum Herstellen einer Dichtung für eine Doppelstromschiene und eine Doppelstromschiene mit solch einer Dichtung.

### Stand der Technik

Die vorliegende Erfindung wird im Folgenden hauptsächlich in Verbindung mit Stromschienen von elektrisch angetriebenen Fahrzeugen beschrieben.

Elektrische Energie zum Antreiben eines elektrisch angetriebenen Fahrzeugs kann über Stromschienen mit einem großen Leitungsquerschnitt zwischen einer Traktionsbatterie des Fahrzeugs und einem Antriebssystem übertragen werden. Um Verluste zu vermeiden, kann ein hohes Spannungsniveau verwendet werden, da so elektrische Leistung mit entsprechend niedrigen elektrischen Stromflüssen übertragen werden kann. Das Spannungsniveau kann wesentlich höher sein als in einem Bordnetz des Fahrzeugs. Daher können die Stromschienen elektrisch getrennt von dem Bordnetz verlaufen.

Eine Stromschiene ist dabei im Wesentlichen ein Streifen Metallmaterial, der über seine Breite und Dicke den Leitungsquerschnitt bereitstellt. Die Stromschienen können paarweise nebeneinander angeordnet sein. Ebenso können die Stromschienen übereinander angeordnet werden und als Doppelstromschiene bezeichnet werden. Die einzelnen Stromschienen sind dabei von einer isolierenden Hülle umschlossen. Durch die Hülle sind die Stromschienen auch vor Umwelteinflüssen geschützt. An einem Übergang in ein Gehäuse können die Stromschienen der Doppelstromschiene getrennt werden und durch zwei getrennte Durchführungen in das Gehäuse eindringen.

### Beschreibung der Erfindung

Eine Aufgabe der Erfindung ist es daher, unter Einsatz konstruktiv möglichst einfacher Mittel ein verbessertes Verfahren zum Herstellen einer Dichtung für eine Doppelstromschiene und eine verbesserte Doppelstromschiene bereitzustellen. Eine Verbesserung kann hierbei beispielsweise den Entfall einer Durchführung am Übergang von einem ungeschützten Bereich der Doppelstromschiene zu einem geschützten Bereich betreffen.

Die Aufgabe wird durch den Gegenstand eines der unabhängigen Ansprüche gelöst. Vorteilhafte Weiterbildungen der Erfindung sind in den abhängigen Ansprüchen, der Beschreibung und den begleitenden Figuren angegeben.

Bei dem hier vorgestellten Ansatz wird eine gemeinsame Dichtung an beide Stromschienen einer Doppelstromschiene angegossen. Die Dichtung ist durch das Angießen fest mit den Stromschienen verbunden.

Durch den hier vorgestellten Ansatz können die Stromschienen einer Doppelstromschiene durch eine gemeinsame Durchführung in ein Gehäuse geführt werden. Durch die Verbindung der Dichtung mit den Stromschienen kann ein Kriechen von Flüssigkeit entlang der Stromschienen sicher verhindert werden.

Gemäß einem ersten Aspekt der Erfindung wird ein Verfahren zum Herstellen einer Dichtung für eine Doppelstromschiene vorgestellt, wobei die Doppelstromschiene aus zwei separat elektrisch isolierten, übereinander angeordneten Flachleitern zusammengesetzt ist, wobei die Doppelstromschiene in einen Formhohlraum zum Formen der Dichtung eingelegt wird, wobei der Formhohlraum um die Doppelstromschiene geschlossen wird und mit einem Dichtungsmaterial gefüllt wird, wobei das Dichtungsmaterial die Flachleiter umfließt, an den Flachleitern anhaftet und im Formhohlraum zu einer an die Doppelstromschiene angegossenen Dichtung erstarrt.

Gemäß einem zweiten Aspekt der Erfindung wird eine Doppelstromschiene aus zwei separat elektrisch isolierten, übereinander angeordneten Flachleitern vorgestellt, wobei die Flachleiter durch eine an die Doppelstromschiene angegossene Dichtung verbunden sind.

Eine Doppelstromschiene kann aus zwei im Wesentlichen gleichartigen Flachleitern bestehen. Die Flachleiter können aus einem Metallmaterial, wie beispielsweise einem Aluminiummaterial bestehen. Die Flachleiter können jeweils in einer Hülle aus elektrisch isolierendem Kunststoff angeordnet sein. Die Hülle kann an die Flachleiter angegossen sein. Die beiden Flachleiter können beispielsweise durch eine Umwicklung mit Klebeband zu der Doppelstromschiene gebündelt werden. Die Flachleiter können als Stromschienen bezeichnet werden.

Ein Dichtungsmaterial kann ein Kunststoffmaterial sein. Das Dichtungsmaterial kann in einem flüssigen oder pastenartigen Zustand bereitgestellt und/oder verarbeitet werden. Beispielsweise kann das Dichtungsmaterial aus zumindest zwei Komponenten gemischt werden und sich nach dem Mischen verfestigen, insbesondere vernetzen. In verfestigtem bzw. vernetztem Zustand kann das Dichtungsmaterial dauerelastisch sein. Ebenso kann das Dichtungsmaterial durch Druck- und/oder Wärmeeinwirkung plastifiziert werden und durch Abkühlung erstarren.

Das flüssige oder pastenartige Dichtungsmaterial kann in einen Formhohlraum eingebracht werden. Das flüssige oder pastenartige Dichtungsmaterial füllt den Formhohlraum zumindest teilweise oder vorzugsweise vollständig aus und nimmt dabei eine Kontur des Formhohlraums zumindest in Teilbereichen oder insgesamt an. Das flüssige oder pastenartige Dichtungsmaterial verfestigt sich, vernetzt oder erstarrt in anderer Weise anschließend in dieser Kontur.

Das flüssige oder pastenartige Dichtungsmaterial kann sich mit den Flachleitern beziehungsweise den Hüllen der Flachleiter verbinden. Dabei kann das Dichtungsmaterial an den Flachleitern anhaften. Das Dichtungsmaterial kann sich beispielsweise in einer Oberfläche der Flachleiter beziehungsweise der Hüllen verklammern. Das Dichtungsmaterial kann sich auch chemisch mit den Flachleitern beziehungsweise Hüllen verbinden. Letztendlich kann sich eine stoffschlüssige und/oder formschlüssige Verbindung zwischen dem Dichtungsmaterial und den Flachleitern einstellen.

Die Flachleiter der Doppelstromschiene können im Formhohlraum auseinandergebogen sein, um einen definierten Spalt zwischen den Flachleitern zu erzeugen. Das Dichtungsmaterial kann in den Spalt zwischen Flachleiter eindringen und in dem Spalt erstarren bzw. verfestigen. Dadurch können die Flachleiter über ihren gesamten Umfang von dem Dichtungsmaterial umflossen werden.

Der Formhohlraum kann durch ein an der Doppelstromschiene angeordnetes Gehäuse ausgebildet werden. Das Dichtungsmaterial kann sich ferner mit dem Gehäuse verbinden. Die Kontur der Dichtung kann durch dafür vorgesehene Wände des Gehäuses ausgebildet werden. Der Formhohlraum kann eine in dem oder durch das Gehäuse gebildete Kammer sein. Der Formhohlraum kann ein Teilbereich des Gehäuses sein. Der Formhohlraum kann eine Eintrittsöffnung und eine Austrittsöffnung für die Doppelstromschiene aufweisen. Das Dichtungsmaterial kann an dem Gehäuse anhaften. Das Dichtungsmaterial kann die Doppelstromschiene mit dem Gehäuse verbinden.

Alternativ kann der Formhohlraum temporär durch ein Werkzeug zum Herstellen der Dichtung ausgebildet werden. Die Doppelstromschiene mit der angegossenen Dichtung kann aus dem Formhohlraum entnommen werden. Ein Werkzeug kann mehrfach verwendet werden, um jeweils gleichartige Dichtungen herzustellen. Das Werkzeug kann mit einem Trennmittel behandelt werden, um eine Anhaftung des Dichtungsmaterials am Werkzeug zu verhindern. Der Formhohlraum kann insbesondere eine glatte Oberfläche aufweisen, um das Verkrallen des Dichtungsmaterials zu verhindern. Die Doppelstromschiene mit der angegossenen Dichtung kann dann beispielsweise an einer Gehäusedurchführung eines Gehäuses verwendet werden.

Die Flachleiter können vor dem Einlegen zumindest im Bereich der Dichtung vorbehandelt werden. Eine Vorbehandlung kann eine Oberfläche der Flachleiter verändern, um die Anhaftung des Dichtungsmaterials zu verbessern. Beispielsweise können die Flachleiter im Bereich der Dichtung aufgeraut werden. Das Aufrauen kann mechanisch und/oder chemisch erfolgen. Bei der Vorbehandlung kann eine oberflächliche Schicht der Flachleiter entfernt werden. Beispielsweise weist der Isolator der Flachleiter eine besonders glatte Oberfläche auf. Die Flachleiter können insbesondere plasmabehandelt werden.

Die Flachleiter können vor dem Einlegen zumindest im Bereich der Dichtung umwickelt werden. Die Flachleiter können beispielsweise mit einem Klebeband umwickelt werden. Das Klebeband kann beispielsweise ein Gewebeband sein. Ein Kleber des Klebebands kann eine gute Haftung an einer Oberfläche der Flachleiter aufweisen. An einer Rückseite des Klebebands kann das Dichtungsmaterial gut anhaften. Die Rückseite kann beispielsweise eine Struktur aufweisen, in der sich das Dichtungsmaterial verkrallen kann. Das Klebeband kann auch aus einem Material bestehen, mit dem das Dichtungsmaterial eine starke Bindung eingeht.

Ein Spalt an zumindest einer Eintrittsstelle der Doppelstromschiene in den Formhohlraum kann abgedichtet werden. Die Eintrittsstelle kann beispielsweise Dichtlippen aufweisen. Die Dichtlippen können beim Einlegen der Doppelstromschiene zumindest geringfügig verformt werden. Die Dichtlippen können an den Flachleitern anliegen und den Spalt abdichten. Die Dichtlippen können beim Füllen des Formhohlraums durch das Dichtungsmaterial gegen die Flachleiter gepresst werden. Dadurch kann eine Dichtwirkung der Dichtlippen verstärkt werden.

Der Spalt kann auch unter Verwendung einer Dichtmasse abgedichtet werden. Eine Dichtmasse kann in den Spalt eingebracht werden und den Spalt überbrücken. Die Dichtmasse kann beispielsweise in den Spalt gespritzt werden.

Der Spalt kann unter Verwendung zumindest eines, eine Kontur des Spalts zumindest anteilig abbildenden Losteils abgedichtet werden. Ein Losteil kann vor dem Schließen des Formhohlraums, während des Schließens oder nach dem Schließen im Spalt angeordnet werden. Das Losteil kann beispielsweise auf einem Teil seiner Kontur eine Kontur der Doppelstromschiene abbilden und an der Doppelstromschiene anliegen. Auf einem anderen Teil der Kontur kann das Losteil eine Außenkontur des Spalts abbilden und an einem Rand des Spalts anliegen. Das Losteil kann beispielsweise Dichtlippen zum Abdichten aufweisen.

Das Formteil kann in dem Spalt zwischen den Flachleitern angeordnet werden. Das Formteil kann den Spalt zwischen den Flachleitern verschließen und abdichten. Das Formteil kann auf zwei gegenüberliegenden Flachseiten jeweils einen Teil der Kontur der Flachleiter abbilden.

### Kurze Figurenbeschreibung

Nachfolgend wird ein vorteilhaftes Ausführungsbeispiel der Erfindung unter Bezugnahme auf die begleitenden Figuren erläutert. Es zeigen:
Fig. 1 zeigt eine Darstellung einer Doppelstromschiene in einem Werkzeug zum Angießen einer Dichtung gemäß einem Ausführungsbeispiel; und
Fig. 2 zeigt eine Darstellung einer Doppelstromschiene mit einer in ein Gehäuse eingegossenen Dichtung gemäß einem Ausführungsbeispiel.

Die Figuren sind schematische Darstellungen und dienen nur der Erläuterung der Erfindung. Gleiche oder gleichwirkende Elemente sind durchgängig mit den gleichen Bezugszeichen versehen.

### Detaillierte Beschreibung

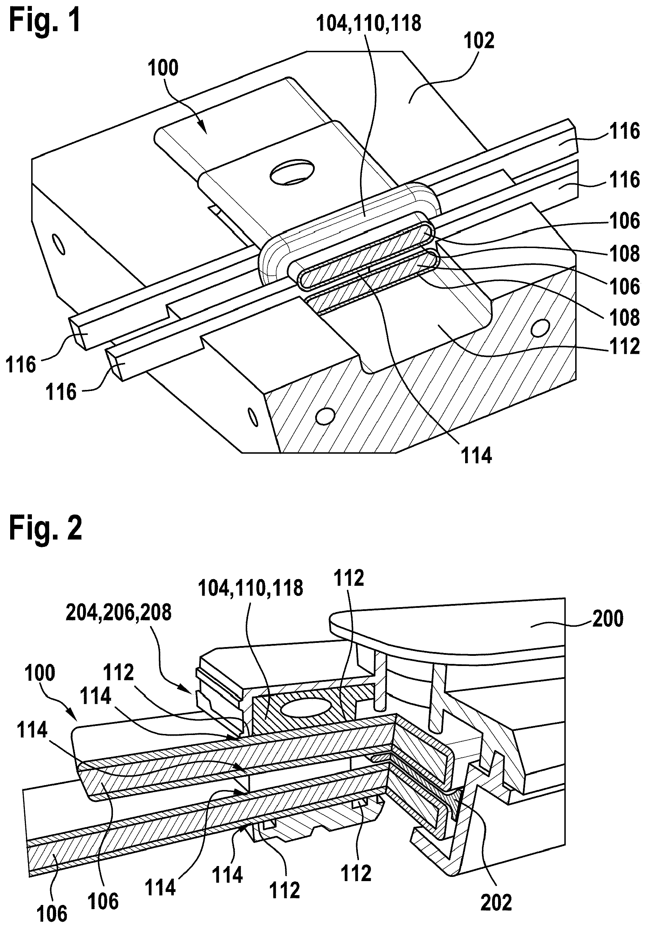

Fig. 1 zeigt eine Darstellung einer Doppelstromschiene 100 in einem Werkzeug 102 zum Angießen einer Dichtung 104 gemäß einem Ausführungsbeispiel. Die Doppelstromschiene 100 besteht aus zwei im Wesentlichen parallel verlaufenden, mit ihren Flachseiten übereinander angeordneten Flachleitern 106. Die Flachleiter 106 sind Streifen aus einem elektrisch leitenden Metallmaterial. Das Metallmaterial ist durch einen elektrisch isolierenden Isolator 108 umhüllt. Der Isolator 108 besteht aus einem Kunststoffmaterial. Insbesondere ist das Kunststoffmaterial ein Thermoplast.

Die Flachleiter 106 stellen große Leitungsquerschnitte zum Übertragen von großen elektrischen Leistungen, Antriebsleistung und Rekuperationsleistung bereit. Der Isolator 108 ist für KFZ-Hochvoltspannung mit Spannungen im Bereich von 1000 Volt dimensioniert.

Das Werkzeug 102 weist eine Kavität auf, die einen Formhohlraum 110 für die Dichtung 104 und Aufnahmen 112 für die Flachleiter 106 der Doppelstromschiene 100 ausbildet. Die Kavität ist auf zwei Werkzeughälften aufgeteilt. Hier ist eine der Werkzeughälften des Werkzeugs 102 dargestellt. Eine Trennebene der Werkzeughälften ist mittig zwischen den Flachleitern 106 angeordnet. Damit ist in jeder Werkzeughälfte die Aufnahme 112 für einen der Flachleiter 106 und die Hälfte des Formhohlraums 110 angeordnet. Die Aufnahmen 112 sind durch den Formhohlraum 110 unterbrochen. Die Aufnahmen 112 erstrecken sich also auf zwei gegenüberliegenden Seiten des Formhohlraums 110 im Werkzeug 102.

Der Formhohlraum 110 erstreckt sich rund um beide Flachleiter 106 der Doppelstromschiene 100. Der Formhohlraum 110 erstreckt sich auch über einen Teilbereich eines Spalts 114 zwischen den Flachleitern 106. Zum Abdichten des Teilbereichs weist das Werkzeug 102 Losteile 116 auf. Die Losteile 116 sind in Führungen des Werkzeugs 102 gelagert und füllen den Spalt 114 beiderseits des Formhohlraums 110 aus. Die Losteile 116 bilden dabei Konturen der Flachleiter bereichsweise ab. Dadurch liegen die Losteile 116 an den Flachleitern zumindest mit einem Linienkontakt an und dichten den Spalt 114 an einer Eintrittsstelle und einer Austrittsstelle der Doppelstromschiene 100 aus dem Formhohlraum 110 ab.

In einem Ausführungsbeispiel weist das Werkzeug 102 vier Losteile 116 auf, die jeweils paarweise den Formhohlraum 110 auf einer Seite begrenzen. Die Losteile sind seitlich in den Spalt 114 einschiebbar.

Zum Herstellen der Dichtung 104 werden die Flachleiter 106 in die Aufnahmen 112 eingelegt, die Werkzeughälften zusammengefahren und der Formhohlraum durch die Losteile 116 abgedichtet. Dann wird der Formhohlraum 110 mit einem flüssigen oder zumindest pastenartigen Dichtungsmaterial 118 gefüllt. Das Dichtungsmaterial 118 umfließt die Flachleiter 106 im Bereich des Formhohlraums 110 und haftet an einer Oberfläche der Flachleiter 106 an. Dann erstarrt das Dichtungsmaterial 118 im Formhohlraum 110 und nimmt die Kontur des Formhohlraums 110 an.

Nachdem das Dichtungsmaterial 118 zu der Dichtung 104 erstarrt ist, werden die Werkzeughälften auseinandergefahren, die Losteile 116 aus dem Spalt 114 entfernt und die Doppelstromschiene 100 mit der angegossenen Dichtung 104 aus dem Werkzeug 102 entnommen.

In einem Ausführungsbeispiel werden die Flachleiter 106 vor dem Einlegen in die Aufnahmen 112 zumindest im Bereich der Dichtung 104 vorbehandelt, um eine verbesserte Haftung des Dichtungsmaterials 118 an der Doppelstromschiene 100 zu erreichen. Dazu wird der Isolator 108 plasmabehandelt, um eine Oberfläche des Isolators 108 zu verändern und die verbesserte Haftung zu erreichen.

In einem Ausführungsbeispiel werden die Flachleiter im Bereich der Dichtung 104 mit einem Klebeband umwickelt. Das Klebeband weist dabei einen für ein Material des Isolators 108 geeigneten Klebstoff auf. Das Klebeband haftet fest auf der Oberfläche und an sich selbst. Das Dichtungsmaterial 118 wiederum haftet an einer Rückseite des Klebebands. Die Rückseite kann beispielsweise aus einem Gewebematerial bestehen. Das Gewebe weist eine raue Oberfläche auf, an der sich das Dichtungsmaterial 118 gut verkrallen kann.

Fig. 2 zeigt eine Darstellung einer Doppelstromschiene 100 mit einer in ein Gehäuse 200 eingegossenen Dichtung 104 gemäß einem Ausführungsbeispiel. Die Doppelstromschiene 100 entspricht dabei im Wesentlichen der Doppelstromschiene in Fig. 1. Im Gegensatz zu Fig. 1 ist der Formhohlraum 110 hier durch das Gehäuse 200 ausgebildet. Der Formhohlraum 110 ist eine Kammer des Gehäuses 200. Der Formhohlraum ist durch eine Rippe des Gehäuses 200 von einem restlichen Innenraum des Gehäuses 200 abgetrennt.

Das Gehäuse 200 weist wie das Werkzeug in Fig. 1 zwei Hälften auf, die zum Einlegen der Flachleiter 106 in Aufnahmen 112 des Gehäuses 200 geöffnet werden.

Die Aufnahmen 112 sind dabei zumindest anteilig durch Wände des Formhohlraums 110 ausgebildet.

Zum Herstellen der Dichtung 104 werden auch hier die Flachleiter 106 in die Aufnahmen 112 eingelegt und das Gehäuse 200 geschlossen, um den Formhohlraum 110 um die Doppelstromschiene 100 herum auszubilden. Dann wird der Formhohlraum 110 mit dem Dichtungsmaterial 118 gefüllt. Dabei verbindet sich das Dichtungsmaterial 118 mit der Doppelstromschiene 100 und Wänden des Formhohlraums 110. Das Dichtungsmaterial 118 verbindet somit die Doppelstromschiene 100 und das Gehäuse 200.

Um eine vollständige Füllung des Formhohlraums zu erreichen, weist der Formhohlraum 110 zumindest einen Anguss und zumindest eine Entlüftung auf. Anguss und Entlüftung können vor und nach dem Verguss durch selbstschließende, geschlitzte Membrane verschlossen sein.

In einem Ausführungsbeispiel wird vor dem Schließen des Gehäuses 200 ein elektrisch isolierendes Zwischenteil 202 zwischen den Flachleitern 106 angeordnet. Das Zwischenteil 202 bildet auf seinen Flachseiten die Kontur der Flachleiter 106 ab. Das Zwischenteil 202 wird dabei im Innenraum des Gehäuses 200 angeordnet und dichtet den Formhohlraum 110 zum Innenraum hin ab.

In einem Ausführungsbeispiel wird vor dem Füllen des Formhohlraums 110 mit dem Dichtungsmaterial eine Eintrittsstelle 204 der Doppelstromschiene 100 in das Gehäuse 200 beziehungsweise den Formhohlraum 110 durch eine Dichtmasse 206 abgedichtet. Die Dichtmasse 206 verschließt dabei den Spalt 114 und verhindert ein Austreten des Dichtungsmaterials 118 aus dem Formhohlraum 110.

In einem Ausführungsbeispiel weist das Gehäuse 200 an der Eintrittsstelle 204 Dichtlippen 208 auf. Die Dichtlippen 208 legen sich beim Einlegen der Doppelstromschiene 100 in die Aufnahmen 112 an die Doppelstromschiene 100 an und dichten so den Spalt 114 ab. Wenn der Formhohlraum 110 mit dem Dichtungsmaterial 118 gefüllt wird, werden die Dichtlippen 208 durch einen statischen Druck in dem Dichtungsmaterial 118 gegen die Doppelstromschiene 100 gepresst. Die Dichtwirkung der Dichtlippen 208 wird so erhöht.

Nachfolgend werden mögliche Ausgestaltungen der Erfindung nochmals zusammengefasst bzw. mit einer geringfügig anderen Wortwahl dargestellt.

Es wird das Abdichten von Hochvolt-Doppelschienen vorgestellt. Dabei kann sowohl um und an einer Doppelschiene abgedichtet werden als auch Gehäuse, die an der Hochvolt-Doppelschiene verbaut werden, abgedichtet werden.

Dazu werden entweder Stromschienen in ein Schäumwerkzeug beziehungsweise eine Form eingelegt und anschließend umschäumt beziehungsweise umgossen, oder Gehäuse beziehungsweise Bauteile werden an der Hochvolt-Doppelschiene verbaut und in weiterer Folge mit Vergussmasse/Polyurethanschaum vergossen.

Durch den hier vorgestellten Ansatz können Gehäuse und Trennstellen abgedichtet werden. Dabei kann Polyurethanschaum verwendet werden, der für Kabeldurchführungen (Tüllen) als bewährtes Material für Dichtheitsanforderungen verwendet wird.

Der hier vorgestellte Ansatz kann automatisiert werden, da der Schäumprozess beziehungsweise Verguss direkt in den Fertigungsablauf eingebunden werden kann. Beim Vergießen von Gehäusen wird hier kein Werkzeug benötigt und es müssen keine zusätzlichen Teile eingelegt werden.

Durch den hier vorgestellten Ansatz werden anhaftende Dichtungen auf Doppelschienen hergestellt. Zum Abdichten von Gehäusen sind keine vorgefertigten Dichtungen erforderlich.

Damit die eine gute Haftung auf den Schienen aufweist, können die Schienen mit Plasma vorbehandelt werden. Alternativ können die Schienen breit oder schmal mit Klebeband umwickelt werden. Bei der breiten Umwicklung kann beispielsweise ein 19 Millimeter breites Gewebeband verwendet werden. Bei der schmalen Umwicklung kann beispielsweise ein neun Millimeter breites Gewebeband verwendet werden.

Als Dichtungsmaterial kann beispielsweise eine Mischung aus einer Polyolkomponente und einer Isocyanatkomponente verwendet werden. Das Dichtungsmaterial kann in ausgehärteter Form elastisch sein und eine zähe Haut aufweisen. Das Dichtungsmaterial kann ein Schaum sein.

Da es sich bei den vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft.

### BEZUGSZEICHENLISTE

- 100: Doppelstromschiene
- 102: Werkzeug
- 104: Dichtung
- 106: Flachleiter
- 108: Isolator
- 110: Formhohlraum
- 112: Aufnahme
- 114: Spalt
- 116: Losteil
- 118: Dichtungsmaterial

- 200: Gehäuse
- 202: Zwischenteil
- 204: Eintrittsstelle
- 206: Dichtmasse
- 208: Dichtlippe

## Patentansprüche

1. Verfahren zum Herstellen einer Dichtung (104) für eine Doppelstromschiene (100), wobei die Doppelstromschiene (100) aus zwei separat elektrisch isolierten, übereinander angeordneten Flachleitern (106) zusammengesetzt ist, wobei die Doppelstromschiene (100) in einen Formhohlraum (110) zum Formen der Dichtung (104) eingelegt wird, wobei der Formhohlraum (110) um die Doppelstromschiene (100) geschlossen wird und mit einem Dichtungsmaterial (118) gefüllt wird, wobei das Dichtungsmaterial (118) die Flachleiter (106) umfließt, an den Flachleitern (106) anhaftet und im Formhohlraum (110) zu einer an die Doppelstromschiene (100) angegossenen Dichtung (104) erstarrt.

2. Verfahren gemäß Anspruch 1, bei dem der Formhohlraum (110) durch ein an der Doppelstromschiene (100) angeordnetes Gehäuse (200) ausgebildet wird, wobei sich das Dichtungsmaterial (118) ferner mit dem Gehäuse (200) verbindet.

3. Verfahren gemäß Anspruch 1, bei dem der Formhohlraum (110) durch ein Werkzeug (102) zum Herstellen der Dichtung (104) ausgebildet wird, wobei die Doppelstromschiene (100) mit der Dichtung (104) aus dem Formhohlraum (110) entnommen wird.

4. Verfahren gemäß einem der vorhergehenden Ansprüche, bei dem die Flachleiter (106) vor dem Einlegen zumindest im Bereich der Dichtung (104) vorbehandelt werden.

5. Verfahren gemäß einem der vorhergehenden Ansprüche, bei dem die Flachleiter (106) vor dem Einlegen zumindest im Bereich der Dichtung (104) umwickelt werden.

6. Verfahren gemäß einem der vorhergehenden Ansprüche, bei dem ein Spalt (114) an zumindest einer Eintrittsstelle (204) der Doppelstromschiene (100) in den Formhohlraum (110) abgedichtet wird.

7. Verfahren gemäß Anspruch 6, bei dem der Spalt (114) durch Dichtlippen (208) abgedichtet wird.

8. Verfahren gemäß einem der Ansprüche 6 bis 7, bei dem der Spalt (114) unter Verwendung einer Dichtmasse (206) abgedichtet wird.

9. Verfahren gemäß einem der Ansprüche 6 bis 8, bei dem der Spalt (114) unter Verwendung zumindest eines, eine Kontur des Spalts (114) zumindest anteilig abbildenden Losteils (116) abgedichtet wird.

10. Verfahren gemäß Anspruch 9, bei dem das Losteil (116) zwischen den Flachleitern (106) angeordnet wird.

11. Doppelstromschiene (100) aus zwei separat elektrisch isolierten, übereinander angeordneten Flachleitern (106), wobei die Flachleiter (106) durch eine an die Doppelstromschiene (100) angegossene Dichtung (104) verbunden sind.
